# EUROPÄISCHE PATENTSCHRIFT

(11) **EP 2 695 324 B1**
(45) Veröffentlichungstag und Bekanntmachung des Hinweises auf die Patenterteilung: **28.03.2018**
(21) Anmeldenummer: 12743425.6
(22) Anmeldetag: 24.07.2012
(51) Int. Cl.: H04L 9/32

(54) **VERFAHREN ZUM AUSSENDEN VON NACHRICHTEN MIT INTEGRITÄTSSCHUTZ**
METHOD FOR SENDING MESSAGES WITH INTEGRITY PROTECTION
PROCÉDÉ PERMETTANT L'ENVOI DE MESSAGES AVEC PROTECTION DE L'INTÉGRITÉ

(30) Priorität: 16.08.2011 DE 102011081036
(43) Veröffentlichungstag der Anmeldung: 12.02.2014
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2012/064527
(87) Internationale Veröffentlichungsnummer: WO 2013/023885

(56) Entgegenhaltungen:
- US-A- 5 978 475
- STEFAN LUCKS ET AL: "Concrete Security for Entity Recognition: The Jane Doe Protocol (Full Paper)", INTERNATIONAL ASSOCIATION FOR CRYPTOLOGIC RESEARCH,, Bd. 20090423:130758, 20. April 2009 (2009-04-20), Seiten 1-20, XP061003825, [gefunden am 2009-04-20]
- AURA T: "Strategies against replay attacks", COMPUTER SECURITY FOUNDATIONS WORKSHOP, 1997. PROCEEDINGS., 10TH ROCKPORT, MA, USA 10-12 JUNE 1997, LOS ALAMITOS, CA, USA,IEEE COMPUT. SOC, US, 10. Juni 1997 (1997-06-10), Seiten 59-68, XP010229295, DOI: 10.1109/CSFW.1997.596787 ISBN: 978-0-8186-7990-2
- CHUL SUR ET AL: "An Efficient Authentication and Simplified Certificate Status Management for Personal Area Networks", 1. Januar 2006 (2006-01-01), MANAGEMENT OF CONVERGENCE NETWORKS AND SERVICES LECTURE NOTES IN COMPUTER SCIENCE;;LNCS, SPRINGER, BERLIN, DE, PAGE(S) 273 - 282, XP019044552, ISBN: 978-3-540-45776-3 das ganze Dokument

## Beschreibung

Die Erfindung betrifft ein Verfahren zum Aussenden von Nachrichten mit Integritätsschutz sowie einen entsprechenden Sender. Ferner betrifft die Erfindung ein Verfahren zum Verarbeiten von Nachrichten mit Integritätsschutz sowie einen entsprechenden Empfänger zum Empfang und Verarbeiten solcher Nachrichten.

In einer Vielzahl von technischen Anwendungsgebieten ist es erforderlich, die Integrität von zwischen Sendern und Empfängern übermittelten Daten zu schützen. Integritätsschutz bedeutet dabei, dass Manipulationen, die an einer Nachricht durchgeführt wurden, über eine entsprechende kryptographische Prüfsumme erkannt werden können. Beispielsweise werden in Automatisierungssystemen oder Sensornetzen Nachrichten übermittelt, an welche eine entsprechende Aktion gekoppelt ist, wie z.B. das Öffnen eines Ventils in einer Automatisierungsanlage. Die Kommunikation zwischen Sendern und Empfängern erfolgt dabei oftmals über eine Broadcast- oder Multicast-Kommunikation. In vielen Szenarien reicht es dabei aus, zu einem bestimmten Zeitpunkt zu prüfen, ob eine zuvor übermittelte Information in einem bestimmten Zeitabschnitt integer war. Werden dabei Fehler entdeckt, können die Aktionen in der Regel zurückgerollt werden oder es kann ein Wechsel in einen betriebssicheren Zustand durch den entsprechenden Empfänger veranlasst werden.

Für einen Integritätsschutz von Nachrichten mittels kryptographischer Prüfsummen ist es erforderlich, entsprechende Schlüssel zur Generierung der Prüfsummen zu verwalten. Aus dem Stand der Technik ist die Erzeugung von sog. Hash-Ketten bekannt. Dabei wird ausgehend von einem initial erzeugten Wert durch aufeinander folgendes Anwenden einer kryptographischen Hash-Funktion beginnend mit dem initialen Wert eine Kette von Werten generiert, die vorberechnete Schlüssel darstellen, die für eine bestimmte Zeitperiode bei einer Nachrichtenübertragung zwischen einem Sender und Empfänger gültig sind. Kryptographische Hash-Funktionen sind an sich aus dem Stand der Technik bekannt. Sie zeichnen sich durch Kollisionsfreiheit aus, d.h. es werden aus zwei unterschiedlichen Werten über die Hash-Funktion immer zwei unterschiedliche Funktionswerte erzeugt. Ferner sind solche Funktionen Einweg-Funktionen, d.h. aus dem Funktionswert kann nicht der Variablenwert rückgerechnet werden, der durch Anwenden der Hash-Funktion zu diesem Funktionswert geführt hat. Aus dem Stand der Technik ist beispielsweise das Protokoll TESLA bzw. µTESLA bekannt, mit dem Hash-Ketten erzeugt werden und die entsprechenden Hash-Werte der Kette übertragen werden.

Bei der Verwendung von Hash-Ketten für den Integritätsschutz werden die entsprechenden Werte der Kette für einen vorbestimmten Zeitraum zum Bilden der kryptographischen Prüfsumme von Nachrichten genutzt. Nach Ablauf des Zeitraums werden die Werte an den Empfänger der integritätsgeschützten Nachrichten übermittelt, der dann die Nachrichten auf Integrität prüfen kann. Die Verwendung von Hash-Ketten weist den Nachteil auf, dass im Falle, dass ein Sender über separate Applikationen Nachrichten mit Integritätsschutz verschicken muss, für jede Applikation separat eine Hash-Kette mit einer Hash-Funktion erzeugen muss.

Das Dokument Stefan Lucks et al.: "Concrete Security for Entity Recognition: The Jane Doe Protocol (Full Paper)", International Association for Cryptologic Research, Bd. 20090423: 130758, 20. April 2009, Seiten 1 bis 20, beschreibt ein Verfahren zum Integritätsschutz von Nachrichten basierend auf der Generierung von Prüfsummen mittels Hash-Werten aus Hash-Ketten.

In dem Dokument T. Aura: "Strategies against replay attacks", Computer Security Foundations Workshop, 1997, Proceedings, 10th Rockport, MA, USA, 10.-12. Juni 1997, Seiten 59 bis 68, ist die Generierung eines MAC-Codes für eine Nachricht unter Verwendung des Nachrichtentyps und eines Master-Schlüssels offenbart.

Aufgabe der Erfindung ist es, ein einfaches und recheneffizientes Verfahren zum Integritätsschutz von Nachrichten zu schaffen.

Diese Aufgabe wird durch das Verfahren gemäß Patentanspruch 1 bzw. den Sender gemäß Patentanspruch 10 bzw. das Verfahren gemäß Patentanspruch 12 bzw. den Empfänger gemäß Patentanspruch 16 gelöst. Weiterbildungen der Erfindungen sind in den abhängigen Ansprüchen definiert.

In dem erfindungsgemäßen Verfahren zum Aussenden von Nachrichten werden in einem entsprechenden Sender, der zum Aussenden der Nachrichten vorgesehen ist, diese Nachrichten vor dem Aussenden mit einem Integritätsschutz versehen. Dabei wird in an sich bekannter Weise eine Hash-Kette von aufeinander folgenden Werten erzeugt, wobei die Werte ausgehend von einem initial erzeugten Wert, der beispielsweise eine Zufallszahl sein kann, durch das aufeinander folgende Anwenden einer kryptographischen Hash-Funktion auf den initial erzeugten Wert (d.h. beginnend mit dem initial erzeugten Wert) generiert werden. Sollte die Hash-Kette nur den initial erzeugten Wert und einen weiteren Hash-Wert umfassen, wird die Hash-Funktion nur einmal auf den initial erzeugten Wert angewendet. Der zuletzt generierte Wert der Hash-Kette stellt dabei einen Ankerwert dar, der einem oder mehreren vorbestimmten Empfängern der Nachrichten bereitgestellt wird, und die restlichen Werte sind in umgekehrter Reihenfolge ihrer Erzeugung in aufeinander folgenden Gültigkeitszeiträumen gültig. Der Begriff des Gültigkeitszeitraums ist dabei weit zu verstehen. Er kann sich dabei auf ein festes Zeitintervall beziehen. Er kann jedoch auch auf andere Weise spezifiziert werden, z.B. durch eine festgelegte Anzahl von ausgesendeten Nachrichten, für welche der entsprechende Wert gültig ist.

In dem Sender wird in dem Gültigkeitszeitraum eines jeweiligen Werts der Hash-Kette eine kryptographische Prüfsumme für eine auszusendende Nachricht (sofern vorhanden) unter Verwendung des jeweiligen Werts generiert. Diese Prüfsumme wird zusammen mit der Nachricht ausgesendet. Dabei können der oder die vorbestimmten Empfänger der Nachricht und der Prüfsumme bei Kenntnis des jeweiligen Werts die Prüfsumme verifizieren und hierdurch die Integrität der Nachricht überprüfen. Damit die Empfänger den jeweiligen Wert erhalten, wird dieser Wert durch den Sender nach Ablauf seines Gültigkeitszeitraums ausgesendet. Dabei können der oder die vorbestimmten Empfänger basierend auf dem bereitgestellten Ankerwert den jeweiligen Wert verifizieren.

Das erfindungsgemäße Verfahren zeichnet sich dadurch aus, dass die Generierung der Prüfsumme derart erfolgt, dass für die auszusendende Nachricht eine die Nachricht charakterisierende Kategorie ermittelt wird, aus der zusammen mit dem gerade gültigen Wert aus der Hash-Kette mittels einer Schlüssel-Ableitungs-Funktion ein Schlüssel abgeleitet wird, mit dem die Prüfsumme für die Nachricht erzeugt wird.

Die Erfindung beruht auf der Erkenntnis, dass zur Generierung der Prüfsumme neben einem entsprechenden Wert aus einer Hash-Kette auch eine nachrichten-spezifische Kategorie herangezogen werden kann. Es wird hierdurch die Möglichkeit geschaffen, mittels einer einzigen Hash-Kette separat Prüfsummen für Nachrichten unterschiedlicher Kategorie zu generieren, ohne dass hierfür mehrere unterschiedliche Hash-Ketten benötigt werden. Der Begriff der Kategorie ist hier und im Folgenden weit zu verstehen und umfasst jede beliebige, mit einer Nachricht im Zusammenhang stehende Eigenschaft, mit der eine Nachricht bzw. eine Gruppe von Nachrichten von anderen Nachrichten bzw. anderen Gruppen von Nachrichten unterschieden werden kann.

In einer besonders bevorzugten Ausführungsform stammt die ermittelte Kategorie aus einer oder mehreren der folgenden Kategorien:
- eine oder mehrere Kategorien, welche jeweils einen Typ einer Nachricht spezifizieren, wobei Typen z.B. nach dem Zweck oder Inhalt der Nachricht (z.B. sicherheitsspezifische Nachrichten, Steuernachrichten, Überwachungsnachrichten) unterschieden werden können;
- eine oder mehrere Kategorien, welche jeweils ein oder mehrere Protokolle und/oder Portnummern spezifizieren, über die eine Nachricht versendet wird;
- eine oder mehrere Kategorien, welche jeweils zumindest einen vorbestimmten Empfänger oder eine Gruppe von Empfängern spezifizieren, für den oder die die Nachricht vorgesehen ist;
- eine oder mehrere Kategorien, welche jeweils ein Zeitintervall spezifizieren, in dem eine Nachricht versendet wird, wobei das Zeitintervall vorzugsweise kürzer als die jeweiligen Gültigkeitszeiträume ist und ggf. auch implizit über eine Anzahl von Nachrichten festgelegt werden kann.

Je nach Anwendungsfall können die Kategorien der einzelnen Nachrichten unterschiedlich ermittelt werden. In einer bevorzugten Variante sind die Kategorien explizit in den auszusendenden Nachrichten enthalten und werden durch den Sender ausgelesen. Alternativ oder zusätzlich besteht auch die Möglichkeit, dass die Kategorien nicht explizit in den Nachrichten enthalten sind, sondern aus den Nachrichten basierend auf deren Eigenschaften abgeleitet werden.

Erfindungsgemäß kann als Schlüssel-Ableitungs-Funktion eine beliebige Einweg-Funktion verwendet werden. In einer besonders bevorzugten Ausführungsform wird dabei eine kryptographische Hash-Funktion eingesetzt. Als Schlüssel-Ableitungs-Funktion bzw. zur Erzeugung der Hash-Kette können beliebige, aus dem Stand der Technik bekannte Hash-Funktionen verwendet werden. Beispiele solcher Hash-Funktionen sind MD5, SHA1, SHA256, HMAC-MD5, HMAC-SHA1, HMAC-SHA256 und AES-CBC-MAC.

Zur Generierung der kryptographischen Prüfsummen können an sich bekannte Verfahren verwendet werden, wobei es jedoch erfindungswesentlich ist, dass bei der Generierung der Prüfsumme ein Schlüssel berücksichtigt wird, der von der Kategorie der Nachricht abhängt. In einer bevorzugten Variante werden als Prüfsummen sog. MAC-Codes (MAC = Message Authentication Code) bzw. MIC-Codes (MIC = Message Integrity Code) verwendet.

Die im Rahmen des erfindungsgemäßen Verfahrens ausgesendeten Nachrichten sind in einer bevorzugten Variante nicht für einen einzelnen Empfänger, sondern für eine größere Gruppe an Empfängern bestimmt. D.h., die Nachrichten werden in diesem Fall als Broadcast- und/oder Multicast-Nachrichten versendet.

Die im erfindungsgemäßen Verfahren ausgesendeten Nachrichten können beliebig ausgestaltet sein. In einer Variante der Erfindung stellen die Nachrichten Datenpakete und/oder Datenframes eines vorbestimmten Protokolls dar, wie z.B. Datenframes auf der L2-Schicht des OSI-Referenzmodells oder Datenpakete aus der WLAN-Protokollfamilie.

Der Ankerwert, der dem oder den vorbestimmten Empfängern im Rahmen des Integritätsschutzes bereitgestellt wird, dient dazu, dass der Empfänger hierüber einen jeweiligen Wert der Hash-Kette verifizieren kann. Der Ankerwert kann dabei auf unterschiedliche Weise den Empfängern bereitgestellt werden. In einer bevorzugten Ausführungsform wird der Ankerwert dem oder den vorbestimmten Empfängern digital signiert bereitgestellt, wobei die Signatur von dem oder den vorbestimmten Empfängern verifizierbar ist, z.B. durch Zugriff auf einen Server, in dem entsprechende Zertifikate zur Überprüfung der Signatur hinterlegt sind. Dabei wird der Ankerwert vorzugsweise durch den Sender signiert und ausgesendet.

Das erfindungsgemäße Verfahren kann zum Übermitteln von Nachrichten in beliebigen Datennetzen eingesetzt werden. Ein besonders bevorzugter Anwendungsfall ist die Übermittlung von Nachrichten in einem Datennetz zur Industrieautomatisierung und/oder zur Energieautomatisierung. Das Verfahren kann dabei z.B. zum Integritätsschutz von Nachrichten aus dem Profinet-Protokoll bzw. Profibus-Protokoll eingesetzt werden. Ein weiterer Anwendungsfall ist der Integritätsschutz von Nachrichten, welche mit dem GOOSE-Protokoll entsprechenden Geräten im Bereich der Energieautomatisierung übermittelt werden. Ebenso kann das Verfahren zur Übermittlung von Nachrichten in einem Sensornetz und insbesondere in einem drahtlosen Sensornetz genutzt werden.

Neben dem oben beschriebenen Verfahren betrifft die Erfindung einen Sender zum Aussenden von Nachrichten mit Integritätsschutz, wobei der Sender derart ausgestaltet ist, dass mit dem Sender im Betrieb das oben beschriebene Verfahren bzw. eine oder mehrere Varianten dieses Verfahrens durchgeführt werden können.

Die Erfindung betrifft darüber hinaus ein Verfahren zum Verarbeiten von Nachrichten mit Integritätsschutz, wobei die Nachrichten durch einen Sender mit dem oben beschriebenen Verfahren ausgesendet wurden. Dabei werden in einem vorbestimmten Empfänger, dem der Ankerwert der im Sender erzeugten Hash-Kette bereitgestellt ist, die nachfolgend erläuterten Schritte durchgeführt. Zunächst werden die Nachrichten zusammen mit den Prüfsummen sowie der jeweilige Wert nach Ablauf seines Gültigkeitszeitraums empfangen. Bei Empfang des jeweiligen Werts wird eine Verifikation des Werts basierend auf dem Ankerwert durchgeführt. Bei erfolgreicher Verifikation des jeweiligen Werts wird die Kategorie von im Gültigkeitszeitraum des jeweiligen Werts empfangener Nachrichten ermittelt. Anschließend wird mittels der gleichen Schlüssel-Ableitungs-Funktion, die vom Sender verwendet wird, aus der Kategorie einer Nachricht und dem jeweiligen Wert ein Schlüssel erzeugt, mit dem die Prüfsumme der Nachricht verifiziert wird. Auf diese Weise wird die Überprüfung einer Prüfsumme erreicht, die mit einem nachrichten-spezifischen Schlüssel verschlüsselt wurde.

In einer bevorzugten Variante des soeben beschriebenen Verfahrens werden die Nachrichten unmittelbar nach dem Empfang weiterverarbeitet, obwohl die Überprüfung der Integrität der Nachrichten erst zu einem späteren Zeitpunkt nach Empfang des jeweiligen Werts aus der Hash-Kette erfolgt. Sollte dabei die Verifikation des empfangenen Werts nicht erfolgreich verlaufen, so können von den Empfängern geeignete Maßnahmen eingeleitet werden. Vorzugsweise wird dabei die Durchführung von einer oder mehreren Aktionen, welche durch Nachrichten initiiert wurden, die im Gültigkeitszeitraum des jeweiligen Werts zusammen mit dem Prüfwert empfangen wurden, beendet bzw. rückgängig gemacht. Alternativ oder zusätzlich besteht die Möglichkeit, dass ein Empfänger bei erfolgloser Verifikation in einen betriebssicheren Zustand übergeht.

Auch an eine erfolglose Verifikation der Prüfsumme einer Nachricht können bestimmte Maßnahmen gekoppelt sein. Vorzugsweise wird analog zur soeben beschriebenen Variante bei erfolgloser Verifikation der Prüfsumme einer Nachricht die Durchführung von einer oder mehreren Aktionen, welche durch die Nachricht initiiert sind, beendet und/oder rückgängig gemacht. Alternativ oder zusätzlich besteht die Möglichkeit, dass ein Empfänger bei erfolgloser Verifikation in einen betriebssicheren Zustand übergeht.

In einer weiteren Variante ist dem vorbestimmten Empfänger der Ankerwert der Hash-Kette digital signiert bereitgestellt, wobei in dem Empfänger die digitale Signatur des Ankerwerts verifiziert wird. Vorzugsweise wird das Verfahren beendet, wenn die Verifikation der digitalen Signatur nicht erfolgreich ist.

Die Erfindung betrifft darüber hinaus einen Empfänger zum Empfang und Verarbeiten von Nachrichten mit Integritätsschutz, wobei die Nachrichten mit dem oben beschriebenen Verfahren ausgesendet wurden und dem Empfänger der Ankerwert bereitgestellt ist. Der Empfänger ist dabei derart ausgestaltet, dass das soeben beschriebene Verfahren zum Verarbeiten von Nachrichten bzw. eine oder mehrere bevorzugte Varianten dieses Verfahrens mit dem Empfänger durchführbar sind.

Die Erfindung betrifft darüber hinaus ein Verfahren zum Übertragen von Nachrichten mit Integritätsschutz, wobei die Nachrichten mit dem oben beschriebenen Verfahren zum Aussenden von Nachrichten durch einen Sender ausgesendet werden und mit dem oben beschriebenen Verfahren zum Verarbeiten von Nachrichten durch einen Empfänger empfangen und verarbeitet werden.

Die Erfindung betrifft darüber hinaus ein System zum Übertragen von Nachrichten mit Integritätsschutz, umfassend zumindest einen erfindungsgemäßen Sender und zumindest einen erfindungsgemäßen Empfänger.

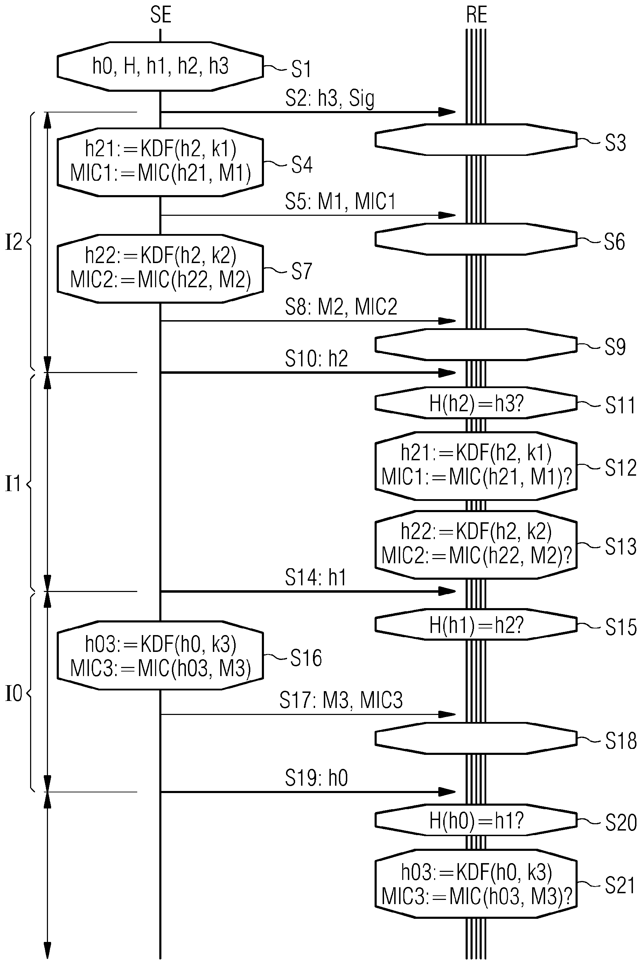

Eine Ausführungsform der Erfindung wird nachfolgend anhand der beigefügten Fig. 1 detailliert beschrieben. Diese Figur zeigt ein Ablaufdiagramm, welches die Schritte einer Variante des erfindungsgemäßen Verfahrens wiedergibt.

Das Verfahren der Erfindung geht aus von der an sich bekannten Nutzung einer sog. Hash-Kette, welche üblicherweise auch als Hash-Chain bezeichnet wird und von einem Sender entsprechender Nachrichten generiert wird. Dabei wird von einem Startwert h0 ausgegangen, bei dem es sich z.B. um einen im Sender erzeugten Zufallswert handelt. Mit einer beliebigen, an sich bekannten kryptographischen Hash-Funktion H werden dann für eine Hash-Kette der Länge n entsprechende Hash-Werte h1, h2, ..., hn durch mehrmaliges Anwenden der Hash-Funktion wie folgt erzeugt:
Startwert h0, h1=H(h0), h2=H(h1), ..., h(n-1)=H(h(n-2)), hn=H(h(n-1)).

Die Elemente h0, h1, ..., hn der Hash-Chain werden als Schlüssel für den Integritätsschutz der von einem Sender ausgesendeten Nachricht genutzt. Ein Schlüssel ist dabei für einen vorbestimmten Gültigkeitszeitraum gültig. Dieser Zeitraum kann explizit durch ein Zeitintervall bzw. auch implizit durch eine Anzahl von Nachrichten, für welche der Schlüssel verwendet werden soll, spezifiziert werden. In herkömmlichen Verfahren wird der entsprechende Wert der Hash-Kette innerhalb seines Gültigkeitszeitraums direkt zur Erzeugung einer kryptographischen Prüfsumme für eine auszusendende Nachricht verwendet, wobei die Prüfsumme zusammen mit der Nachricht übertragen wird. Nach Ablauf des Gültigkeitszeitraums wird schließlich der entsprechende Wert der Hash-Kette für den gerade abgelaufenen Gültigkeitszeitraum durch den Sender ausgesendet. Ein Empfänger kann anschließend mittels dieses Werts die Prüfsumme und damit die Integrität der zuvor übertragenen Nachrichten verifizieren. Im Unterschied zu diesem herkömmlichen Verfahren werden erfindungsgemäß zur Generierung der Prüfsumme nicht unmittelbar die Werte aus der Hash-Kette verwendet, sondern es wird mit einer geeigneten Schlüssel-Ableitungs-Funktion ein weiterer Schlüssel ermittelt, der an Kategorien gekoppelt ist, wie weiter unten erläutert wird.

In dem Verfahren der Fig. 1 werden von einem Sender SE Broadcast- bzw. Multicast-Nachrichten an eine Vielzahl von Empfängern ausgesendet, welche die Nachrichten weiterverarbeiten, wobei im Folgenden die Kommunikation zwischen dem Sender SE und einem der Empfänger RE erläutert wird. In dem Verfahren wird in an sich bekannter Weise in Schritt S1 die Hash-Kette basierend auf einem initialen Wert h0 durch mehrmaliges Anwenden der kryptographischen Hash-Funktion H auf h0 erzeugt. In dem Beispiel der Fig. 1 werden drei Hash-Werte h1, h2 und h3 erzeugt, d.h. die Hash-Kette weist die Länge n=3 auf.

Zu Beginn der Kommunikation wird in Schritt S2 der zuletzt generierte Hash-Wert h3 zusammen mit einer Signatur Sig vom Sender SE verschickt. Dieser Schritt ist im Rahmen der Verwendung von Hash-Ketten an sich aus dem Stand der Technik bekannt. Durch den Schritt S2 wird der Wert h3 als Ankerwert dem Empfänger RE mitgeteilt. Der Empfänger kann dabei in geeigneter Weise die Signatur Sig mittels eines Zertifikats, das er sich z.B. von einem Zertifikats-Server herunterladen kann, verifizieren. D.h., über einen ihm bekannt gemachten öffentlichen Schlüssel kann er die mit dem entsprechenden privaten Schlüssel des Senders generierte Signatur überprüfen. Im Rahmen von Schritt S2 kann ggf. auch eine Information über den Gültigkeitszeitraum der jeweiligen Werte der Hash-Kette, z.B. in der Form einer Variablen, an den Empfänger übertragen werden. Der Gültigkeitszeitraum kann jedoch ggf. auch implizit den Empfängern bekannt (z.B. fest vorgegeben) sein.

In Schritt S3 der Fig. 1 erfolgt die bereits oben erwähnte Verifikation der Signatur Sig, wobei das Verfahren nur fortgesetzt wird, wenn die Signatur verifiziert werden kann. Auf diese Weise wird sichergestellt, dass keine Hash-Ketten von unbefugten Dritten weiterverarbeitet werden. Darüber hinaus wird in Schritt S3 der Ankerwert h3 der Hash-Kette im Empfänger RE gespeichert.

Nach dem Aussenden des Ankerwerts h3 und der Signatur Sig wird in dem Sender SE für die erste auszusendende Nachricht M1 eine geeignete kryptographische Prüfsumme generiert. In der hier beschriebenen Ausführungsform wird der an sich bekannte Message Integrity Code erzeugt, wobei auch andere Arten von kryptographischen Prüfsummen und insbesondere der Message Authentication Code generiert werden können. Im Stand der Technik wird hierzu direkt der vor dem Ankerwert h3 generierte Hash-Wert h2 verwendet. Erfindungsgemäß wird jedoch in Schritt S4 zunächst mit einer geeigneten Schlüssel-Ableitungs-Funktion KDF ein Schlüssel generiert, der von einer Kategorie abhängt, die der entsprechenden Nachricht M1 zugeordnet ist. Als Schlüssel-Ableitungs-Funktion kann z.B. wiederum eine beliebige kryptographische Hash-Funktion eingesetzt werden, jedoch können auch beliebige andere Arten von bekannten Schlüssel-Ableitungs-Funktionen benutzt werden. Die Kategorien können sich auf beliebige Eigenschaften beziehen, welche mit der entsprechenden Nachricht in Zusammenhang stehen. Die Kategorien können dabei als Label in der Nachricht selbst enthalten sein, jedoch besteht ggf. auch die Möglichkeit, dass die Kategorien aus der Nachricht abgeleitet werden.

In der hier beschriebenen Variante der Erfindung werden Labels zur Festlegung der Kategorie in den Nachrichten verwendet. Dabei kann das Label z.B. festlegen, zu welchem Dienst bzw. zu welcher Anwendung bzw. zu welcher Gruppe von Diensten oder Anwendungen die Nachricht gehört. Insbesondere können in den Nachrichten Sicherheitsdienste über Labels spezifiziert werden. Für einen Authentisierungs-Dienst kann beispielsweise das Label SID_Authenticity und für einen Nachrichten-Integritäts-Dienst das Label SID_Integrity eingesetzt werden. Ferner können alternativ oder zusätzlich Typen von Nachrichten mittels Labels unterschieden werden, wobei der Typ X (X=1, 2, ...) durch das entsprechende Label MID_TYP_X bezeichnet werden kann.

In der Ausführungsform der Fig. 1 werden die berücksichtigten Nachrichtenkategorien mit k1, k2 und k3 bezeichnet. Die Kategorie k1 steht dabei für "Safety", d.h. die Nachricht betrifft Sicherheitsaspekte. Demgegenüber bezeichnet k2 die Kategorie "Control", d.h. die Nachricht ist eine Steuernachricht. Die Kategorie k3 lautet "Monitoring", d.h. die entsprechende Nachricht ist eine Überwachungsnachricht.

In Schritt S4 ermittelt der Sender SE für die Nachricht M1 die Kategorie k1. Basierend darauf erzeugt er dann über die Schlüssel-Ableitungs-Funktion KDF mit dem Hash-Wert h2 in Kombination mit der Kategorie k1 den Schlüssel h21, d.h. er bestimmt h21=KDF(h2, k1). Bei der Generierung von Schlüsseln mit der Schlüssel-Ableitungs-Funktion KDF wird diese Funktion vorzugsweise auf eine Konkatenation des entsprechenden Hash-Werts mit der Kategorie angewendet. Wie bereits erwähnt, können beliebige Schlüssel-Ableitungs-Funktionen verwendet werden, wie z.B. die kryptographische Hash-Funktion SHA1 bzw. HMAC-SHA1. Mit dem ermittelten Schlüssel h21 wird anschließend die Prüfsumme unter Verwendung des Message Integrity Codes MIC erzeugt, d.h. für die Nachricht M1 ergibt sich die Prüfsumme MIC1=MIC(h21, M1). Es wird somit in Schritt S4 ein nachrichten-spezifischer Schlüssel h21 und damit eine nachrichten-spezifische Prüfsumme MIC1 generiert.

In Schritt S5 wird die Nachricht M1 und die Prüfsumme MIC1 durch den Sender SE ausgesendet. Der Empfänger RE speichert anschließend in Schritt S6 die Nachricht M1 sowie die Prüfsumme MIC1 und führt an die Nachricht M1 gekoppelte Aktionen durch. Das Verfahren kann dabei z.B. zur Kommunikation in einem Datennetz einer industriellen Anlage verwendet werden, in dem ein Sender in der Form eines Sensors eine Nachricht mit entsprechend sensierten Werten an Empfänger in der Form von Aktoren aussendet, welche basierend auf den Werten weitere Aktionen durchführen.

In dem Verfahren der Fig. 1 wird in einem Schritt S7 von dem Sender SE eine weitere Nachricht M2 ausgesendet, wobei wiederum zunächst die Kategorie dieser Nachricht bestimmt wird. Es handelt sich dabei um eine Nachricht der Kategorie k2. In Analogie zu Schritt S4 wird dann ein Schlüssel h22 basierend auf der Schlüssel-Ableitungs-Funktion KDF aus dem Hash-Wert h2 und der Kategorie k2 generiert. D.h., es gilt h22=KDF(h2, k2). Mit diesem nachrichten-spezifischen Schlüssel wird wiederum die Prüfsumme MIC2=MIC(h22, M2) für die Nachricht M2 generiert. Die Nachricht M2 wird dann zusammen mit der Prüfsumme MIC2 in Schritt S8 vom Sender SE ausgesendet. Nachricht und Prüfsumme werden anschließend im Empfänger RE in Schritt S9 gespeichert. Analog können noch weitere Nachrichten mit entsprechenden Prüfsummen generiert und vom Sender SE an den Empfänger RE übertragen werden.

In Fig. 1 sind für die einzelnen Werte h0, h1 und h2 deren Gültigkeitszeiträume mit I0, I1 und I2 angedeutet. Im Gültigkeitszeitraum I2 wird immer der Hash-Wert h2 in Kombination mit der entsprechenden Nachrichtenkategorie zur Erzeugung der Prüfsumme verwendet. Demgegenüber wird im Gültigkeitsintervall I1 der Hash-Wert h1 und im Gültigkeitszeitraum 10 der initiale Wert h0 zur Erzeugung entsprechender Prüfsummen eingesetzt.

Nach Ablauf des Gültigkeitszeitraums 12 wird in Schritt S10 der Hash-Wert h2 von dem Sender SE ausgesendet. Es wird somit sichergestellt, dass die Übermittlung dieses Hash-Werts erst dann erfolgt, wenn dieser nicht mehr gültig ist, wodurch die Sicherheit des Verfahrens erhöht wird. Anschließend beginnt dann der Gültigkeitszeitraum I1 für den Hash-Wert h1. In diesem Zeitraum können wiederum entsprechende Nachrichten ausgesendet werden, die in Analogie zu den Schritten S4 und S7 basierend auf der gleichen Schlüssel-Ableitungs-Funktion KDF, nunmehr aber unter Verwendung des Hash-Werts h1, mit einer Prüfsumme versehen werden. Im Szenario der Fig. 1 werden im Zeitintervall I1 jedoch keine Nachrichten übertragen. Unabhängig hiervon wird im Zeitintervall I1 vom Empfänger RE die Überprüfung der Prüfsummen der im Gültigkeitszeitraum 12 übermittelten Nachrichten durchgeführt. Hierzu wird zunächst in Schritt S11 mit der gleichen Hash-Funktion H, über welche der Sender die Hash-Kette erzeugt hat, der Hash-Wert h2 verifiziert. Dies geschieht dadurch, dass die Hash-Funktion auf den Wert h2 angewendet wird und überprüft wird, ob der sich hieraus ergebende Wert mit dem Ankerwert h3 übereinstimmt. Ist dies nicht der Fall, werden durch den Empfänger entsprechende Maßnahmen eingeleitet. Insbesondere werden Aktionen, welche aufgrund der im Gültigkeitszeitraum 12 empfangenen Nachrichten von dem Empfänger durchgeführt wurden, wieder rückgängig gemacht. Ergibt sich jedoch eine Übereinstimmung, wurde der entsprechende Hash-Wert h2 erfolgreich verifiziert und wird daraufhin gespeichert.

Bei erfolgreicher Verifikation wird auf Seiten des Empfängers in Schritt S12 die Kategorie der empfangenen Nachricht M1 bestimmt. Mit der gleichen Schlüssel-Ableitungs-Funktion KDF, die auch auf Seiten des Empfängers verwendet wurde, wird dann der Schlüssel h21 basierend auf der Kategorie k1 und dem Hash-Wert h2 abgeleitet, d.h. es wird h21=KDF(h2, k1) bestimmt. Anschließend erfolgt die Verifikation der Prüfsumme, indem der Message Integrity Code MIC(h21, M1) für die Konkatenation aus h21 und M1 bestimmt wird und mit der empfangenen Prüfsumme MIC1 verglichen wird. Bei Übereinstimmung wird die Integrität der Nachricht M1 durch den Empfänger RE festgestellt. Liegt keine Übereinstimmung vor, wurde die Nachricht unbefugt manipuliert und es können wiederum geeignete Gegenmaßnahmen durch den Empfänger eingeleitet werden. Insbesondere werden Aktionen, welche aufgrund des Empfangs der Nachricht M1 ausgelöst wurden, wieder rückgängig gemacht.

Mit der Nachricht M2 wird in Schritt S13 analog wie mit der Nachricht M1 verfahren. D.h., es wird die Kategorie k2 der Nachricht M2 bestimmt und basierend darauf der Schlüssel h22=KDF(h2, k2) ermittelt. Mit h22 wird dann der Message Integrity Code MIC(h22, M2) berechnet, der mit dem empfangenen Code MIC2 verglichen wird. Sollte keine Integrität vorliegen, besteht wiederum die Möglichkeit, die an die Nachricht M2 gekoppelten Aktionen, die von dem Empfänger RE zuvor ausgeführt wurden, wieder rückgängig zu machen.

Nach Ablauf des Gültigkeitszeitraums I1 des Hash-Werts h1 wird dieser Wert im Schritt S14 von dem Sender SE ausgesendet, wobei der Empfänger RE dann in Schritt S15 analog zu Schritt S11 eine Verifikation des Hash-Werts h1 durchführt, indem er überprüft, ob die Anwendung der Hash-Funktion H auf den Wert h1 zu dem Wert h2 führt, der im Schritt S11 gespeichert wurde. Dabei wird in Schritt S15 der Wert h1 gespeichert. Bei erfolgloser Verifikation können ggf. wieder entsprechende Aktionen rückgängig gemacht werden, die im Gültigkeitszeitraum I1 durch übermittelte Nachricht ausgelöst wurden. In dem Szenario der Fig. 1 wurden im Gültigkeitszeitraum I1 keine Nachrichten empfangen, so dass sich weitere Schritte zur Überprüfung von Prüfsummen erübrigen.

Im Schritt S16 wird im Gültigkeitszeitraum 10 des Werts h0 das Aussenden einer weiteren Nachricht M3 durch den Sender SE vorbereitet. In Analogie zu den Schritten S4 und S7 wird zunächst die Kategorie k3 für die Nachricht M3 ermittelt. Hieraus wird der Schlüssel h03=KDF(h0, k3) bestimmt, der dann zur Generierung der Prüfsumme MIC3=MIC(h03, M3) verwendet wird. Die Nachricht M3 und die Prüfsumme MIC3 werden im Schritt S17 vom Sender SE ausgesendet. Der Empfänger RE, der M3 und MIC3 empfängt, speichert diese in Schritt S18. Nach Ablauf des Gültigkeitszeitraums 10 wird der Wert h0 in Schritt S19 durch den Sender SE ausgesendet. Der Empfänger RE verifiziert dann in Schritt S20 diesen Wert, indem er überprüft, ob H(h0) mit dem in Schritt S15 gespeicherten Wert h1 übereinstimmt. Bei erfolgreicher Verifikation wird h0 gespeichert. Anschließend wird wiederum die Kategorie der Nachricht M3 bestimmt, mittels der dann in Schritt S21 der Schlüssel h03=KDF(h0, k3) mit der Schlüssel-Ableitungs-Funktion KDF ermittelt wird. Anschließend erfolgt die Verifikation des zuvor empfangenen Prüfwerts MIC3, indem überprüft wird, ob MIC3=MIC(h03, M3) gilt. Sollten die entsprechenden Verifikationen in Schritt S20 bzw. in Schritt S21 nicht erfolgreich sein, können die an die Nachricht gekoppelten Aktionen z.B. wieder rückgängig gemacht werden.

Wie sich aus den obigen Ausführungen ergibt, kann über die Festlegung entsprechender Kategorien für auszusendende Nachrichten in geeigneter Weise ein nachrichten-spezifischer Schlüssel abgeleitet werden, der in Kombination mit einer Hash-Chain zur Erzeugung einer Prüfsumme verwendet wird. Die Kategorien werden dabei vorzugsweise durch Labels bezeichnet, die z.B. Nachrichtentypen bzw. Anwendungen oder Dienste charakterisieren. Die Kategorien können jedoch auch auf andere Art und Weise eine Nachricht charakterisieren. Insbesondere kann die Kategorie ein Unterzeitintervall des Gültigkeitszeitraums des entsprechenden Werts der Hash-Kette festlegen, wobei eine Nachricht zu einer Kategorie des entsprechenden Unterzeitintervalls gehört, wenn sie in diesem Unterzeitintervall ausgesendet wurde. Auf diese Weise können die Gültigkeitszeiträume der Hash-Werte weiter verfeinert werden.

Das erfindungsgemäße Verfahren kann zum Schutz beliebiger Nachrichten verwendet werden. Insbesondere können Nachrichten in der Form von einzelnen Datenpaketen bzw. Datenframes geschützt werden, wie z.B. Datenframes auf Layer 2 gemäß MACsec bzw. Datenpakete im WLAN-CCMP-Format oder im 802.15.4 AES-CCM-Format. Die im erfindungsgemäßen Verfahren verwendete Hash-Chain kann mit an sich bekannten Verfahren ermittelt und deren Werte zeitverzögert an Empfangsknoten übertragen werden. Hierzu können die bereits eingangs erwähnten Protokolle TESLA bzw. µTESLA eingesetzt werden. Auch zur Generierung der Prüfsumme für die übertragenen Nachrichten können an sich bekannte Verfahren eingesetzt werden, insbesondere kann eine kryptographische Prüfsumme in der Form eines Message Authentication Code bzw. Message Integrity Code erzeugt werden.

Die im Vorangegangenen beschriebenen Ausführungsformen des erfindungsgemäßen Verfahrens weisen eine Reihe von Vorteilen auf. Insbesondere kann das Verfahren von einer einzelnen Schlüsselmanagement-Komponente des Senders bzw. Empfängers für unterschiedliche Anwendungen bzw. Dienste durchgeführt werden. Eine Software-Komponente des Senders bzw. Empfängers, welche Nachrichten einer spezifischen Kategorie (z.B. sicherheitskritische Nachrichten oder Real-Time-Control-Nachrichten) verarbeitet, erhält dabei von einer Schlüsselmanagement-Komponente des Senders bzw. Empfängers nur diejenigen Schlüssel, die für diese Aufgabe erforderlich sind, wobei diese Schlüssel unter Berücksichtigung der Kategorie bestimmt werden. Dadurch kann insbesondere eine Komponente des Senders nur solche Nachrichten senden, die zu derjenigen Kategorie gehören, für die diese Komponente gültiges Schlüsselmaterial erhalten hat. Auch bei einer fehlerhaften Implementierung der Software-Komponente ist dadurch die Sicherheit derjenigen Software-Komponenten mit einem höheren Schutzbedarf nicht gefährdet.

In dem erfindungsgemäßen Verfahren wird ferner nur eine Hash-Kette zwischen einem Sender und einem oder mehreren Empfängern benötigt, um mehrere Dienste oder Nachrichtentypen durch separates Schlüsselmaterial zu schützen. Hierdurch wird der Speicherbedarf für die Verwaltung von Hash-Ketten auf der Seite des Senders und Empfängers reduziert, da nur eine Hash-Kette je Sender verwaltet werden muss. Die spezifischen, zum Integritätsschutz verwendeten Schlüssel lassen sich jederzeit bei Bedarf aus dem aktuell gültigen Wert der Hash-Kette ableiten.

## Patentansprüche

1. Verfahren zum Aussenden von Nachrichten (M1, M2, M3) mit Integritätsschutz, bei dem in einem zum Aussenden der Nachrichten (M1, M2, M3) vorgesehenen Sender (SE):
- eine Hash-Kette von aufeinander folgenden Werten (h1, h2, h3) erzeugt wird, wobei die Werte (h1, h2, h3) ausgehend von einem initial erzeugten Wert (h0) durch das aufeinander folgende Anwenden einer kryptographischen Hash-Funktion (H) auf den initial erzeugten Wert (h0) generiert werden, wobei der zuletzt generierte Wert (h3) einen Ankerwert darstellt, der einem oder mehreren vorbestimmten Empfängern (RE) der Nachrichten (M1, M2, M3) bereitgestellt wird, und die restlichen Werte (h0, h1, h2) in umgekehrter Reihenfolge ihrer Erzeugung in aufeinander folgenden Gültigkeitszeiträumen (I0, I1, I2) gültig sind;
- in dem Gültigkeitszeitraum (I0, I1, I2) eines jeweiligen Werts (h1, h2, h3) eine kryptographische Prüfsumme (MIC1, MIC2, MIC3) für eine auszusendende Nachricht (M1, M2, M3) unter Verwendung des jeweiligen Werts (h0, h1, h2) generiert wird und die Prüfsumme zusammen mit der Nachricht (M1, M2, M3) ausgesendet wird;
- der jeweilige Wert (h0, h1, h2) nach Ablauf seines Gültigkeitszeitraums (I0, I1, I2) ausgesendet wird;
**dadurch gekennzeichnet, dass** die Generierung der Prüfsumme (MIC1, MIC2, MIC3) derart erfolgt, dass für die auszusendende Nachricht (M1, M2, M3) eine die Nachricht (M1, M2, M3) charakterisierende Kategorie (k1, k2, k3) ermittelt wird, aus der zusammen mit dem gerade gültigen Wert (h0, h1, h2) mittels einer Schlüssel-Ableitungs-Funktion (KDF) ein Schlüssel (h21, h22, h03) abgeleitet wird, mit dem die Prüfsumme (MIC1, MIC2, MIC3) für die Nachricht (M1, M2, M3) erzeugt wird.

2. Verfahren nach Anspruch 1, bei dem die ermittelte Kategorie aus einer oder mehreren der folgenden Kategorien (k1, k2, k3) stammt:
- eine oder mehrere Kategorien (k1, k2, k3), welche jeweils einen Typ einer Nachricht (M1, M2, M3) spezifizieren;
- eine oder mehrere Kategorien (k1, k2, k3), welche jeweils zumindest einen Dienst oder zumindest eine Anwendung spezifizieren, über den oder über die eine Nachricht (M1, M2, M3) versendet wird;
- eine oder mehrere Kategorien (k1, k2, k3), welche jeweils ein oder mehrere Protokolle und/oder Portnummern spezifizieren, über die eine Nachricht (M1, M2, M3) versendet wird;
- eine oder mehrere Kategorien (k1, k2, k3), welche jeweils zumindest einen vorbestimmten Empfänger (RE) spezifizieren, für den die Nachricht (M1, M2, M3) vorgesehen ist;
- eine oder mehrere Kategorien (k1, k2, k3), welche jeweils ein Zeitintervall spezifizieren, in dem eine Nachricht versendet wird, wobei das Zeitintervall vorzugsweise kürzer als die jeweiligen Gültigkeitszeiträume (I0, I1, I2) ist.

3. Verfahren nach Anspruch 1 oder 2, bei dem die Kategorien (k1, k2, k3) in den auszusendenden Nachrichten (M1, M2, M3) enthalten sind und/oder aus den auszusendenden Nachrichten (M1, M2, M3) abgeleitet werden.

4. Verfahren nach einem der vorhergehenden Ansprüche, bei dem die Schlüssel-Ableitungs-Funktion (KDF) eine kryptographische Hash-Funktion ist

5. Verfahren nach einem der vorhergehenden Ansprüche, bei dem die Prüfsummen (MIC1, MIC2, MIC3) MAC-Codes oder MIC-Codes sind.

6. Verfahren nach einem der vorhergehenden Ansprüche, bei dem die Nachrichten (M1, M2, M3) als Broadcast- und/oder Multicast-Nachrichten ausgesendet werden.

7. Verfahren nach einem der vorhergehenden Ansprüche, bei dem die Nachrichten (M1, M2, M3) Datenpakete und/oder Datenframes eines vorbestimmten Protokolls sind.

8. Verfahren nach einem der vorhergehenden Ansprüche, bei dem der Ankerwert (h3) dem oder den vorbestimmten Empfängern (RE) digital signiert bereitgestellt wird, wobei die Signatur von dem oder den vorbestimmten Empfängern (RE) verifizierbar ist.

9. Verfahren nach einem der vorhergehenden Ansprüche, bei dem die Nachrichten (M1, M2, M3) in einem Datennetz zur Industrieautomatisierung und/oder zur Energieautomatisierung und/oder in einem Sensornetz übermittelt werden.

10. Sender zum Aussenden von Nachrichten mit Integritätsschutz, wobei der Sender derart ausgestaltet ist, dass mit dem Sender (SE) im Betrieb:
- eine Hash-Kette von aufeinander folgenden Werten (h1, h2, h3) erzeugt wird, wobei die Werte (h1, h2, h3) ausgehend von einem initial erzeugten Wert (h0) durch das aufeinander folgende Anwenden einer kryptographischen Hash-Funktion (H) auf den initial erzeugten Wert (h0) generiert werden, wobei der zuletzt generierte Wert (h3) einen Ankerwert darstellt, der einem oder mehreren vorbestimmten Empfängern (RE) der Nachrichten (M1, M2, M3) bereitgestellt wird, und die restlichen Werte (h0, h1, h2) in umgekehrter Reihenfolge ihrer Erzeugung in aufeinander folgenden Gültigkeitszeiträumen (I0, I1, I2) gültig sind;
- in dem Gültigkeitszeitraum (I0, I1, I2) eines jeweiligen Werts (h1, h2, h3) eine kryptographische Prüfsumme (MIC1, MIC2, MIC3) für eine auszusendende Nachricht (M1, M2, M3) unter Verwendung des jeweiligen Werts (h0, h1, h2) generiert wird und die Prüfsumme zusammen mit der Nachricht (M1, M2, M3) ausgesendet wird;
- der jeweilige Wert (h0, h1, h2) nach Ablauf seines Gültigkeitszeitraums (I0, I1, I2) ausgesendet wird;
**dadurch gekennzeichnet, dass** die Generierung der Prüfsumme (MIC1, MIC2, MIC3) derart erfolgt, dass für die auszusendende Nachricht (M1, M2, M3) eine die Nachricht (M1, M2, M3) charakterisierende Kategorie (k1, k2, k3) ermittelt wird, aus der zusammen mit dem gerade gültigen Wert (h0, h1, h2) mittels einer Schlüssel-Ableitungs-Funktion (KDF) ein Schlüssel (h21, h22, h03) abgeleitet wird, mit dem die Prüfsumme (MIC1, MIC2, MIC3) für die Nachricht (M1, M2, M3) erzeugt wird.

11. Sender nach Anspruch 10, wobei der Sender zur Durchführung eines Verfahrens nach einem der Ansprüche 2 bis 9 ausgestaltet ist.

12. Verfahren zum Verarbeiten von Nachrichten mit Integritätsschutz, wobei die Nachrichten durch einen Sender mit einem Verfahren nach einem der Ansprüche 1 bis 9 ausgesendet wurden, wobei in einem vorbestimmten Empfänger (RE), dem der Ankerwert (h3) bereitgestellt ist:
- die Nachrichten (M1, M2, M3) zusammen mit den Prüfsummen (MIC1, MIC2, MIC3) sowie der jeweilige Wert (h0, h1, h2) nach Ablauf seines Gültigkeitszeitraums (I0, I1, I2) empfangen werden;
- bei Empfang des jeweiligen Werts (h0, h1, h2) eine Verifikation des Werts (h0, h1, h2) basierend auf dem Ankerwert (h3) durchgeführt wird;
- bei erfolgreicher Verifikation des jeweiligen Werts (h0, h1, h2) die Kategorie (k1, k2, k3) von im Gültigkeitszeitraum des jeweiligen Werts (h0, h1, h2) empfangener Nachrichten (M1, M2, M3) ermittelt und mittels der gleichen Schlüssel-Ableitungs-Funktion (KDF), die vom Sender (SE) verwendet wird, aus der Kategorie (k1, k2, k3) einer Nachricht (M1, M2, M3) und dem jeweiligen Wert (h0, h1, h2) ein Schlüssel (h21, h22, h03) erzeugt wird, mit dem die Prüfsumme (MIC1, MIC2, MIC3) der Nachricht (M1, M2, M3) verifiziert wird.

13. Verfahren nach Anspruch 12, wobei bei erfolgloser Verifikation des jeweiligen Werts (h0, h1, h2) die Durchführung von einer oder mehreren Aktionen, welche durch Nachrichten initiiert sind, die im Gültigkeitszeitraum (I0, I1, I2) des jeweiligen Werts (h0, h1, h2) zusammen mit einem Prüfwert (h0, h1, h2) empfangen wurden, beendet und/oder rückgängig gemacht werden.

14. Verfahren nach Anspruch 12 oder 13, wobei bei erfolgloser Verifikation der Prüfsumme (MIC1, MIC2, MIC3) einer Nachricht (M1, M2, M3) die Durchführung von einer oder mehreren Aktionen, welche durch die Nachricht initiiert sind, beendet und/oder rückgängig gemacht werden.

15. Verfahren nach einem der Ansprüche 12 bis 14, wobei dem vorbestimmten Empfänger (RE) der Ankerwert (h3) digital signiert bereitgestellt ist, wobei in dem Empfänger (RE) die digitale Signatur des Ankerwerts (h3) verifiziert wird.

16. Empfänger zum Empfang und Verarbeiten von Nachrichten mit Integritätsschutz, wobei die Nachrichten mit einem Verfahren nach einem der Ansprüche 1 bis 9 ausgesendet wurden, wobei dem Empfänger der Ankerwert (h3) bereitgestellt ist und der Empfänger derart ausgestaltet ist, dass in dessen Betrieb:
- die Nachrichten (M1, M2, M3) zusammen mit den Prüfsummen (MIC1, MIC2, MIC3) sowie der jeweilige Wert (h0, h1, h2) nach Ablauf seines Gültigkeitszeitraums (I0, I1, I2) empfangen werden;
- bei Empfang des jeweiligen Werts (h0, h1, h2) eine Verifikation des Werts (h0, h1, h2) basierend auf dem Ankerwert (h3) durchgeführt wird;
- bei erfolgreicher Verifikation des jeweiligen Werts (h0, h1, h2) die Kategorie (k1, k2, k3) von im Gültigkeitszeitraum des jeweiligen Werts (h0, h1, h2) empfangener Nachrichten (M1, M2, M3) ermittelt und mittels der gleichen Schlüssel-Ableitungs-Funktion (KDF), die vom Sender (SE) verwendet wird, aus der Kategorie (k1, k2, k3) einer Nachricht (M1, M2, M3) und dem jeweiligen Wert (h0, h1, h2) ein Schlüssel (h21, h22, h03) erzeugt wird, mit dem die Prüfsumme (MIC1, MIC2, MIC3) der Nachricht (M1, M2, M3) verifiziert wird.

17. Empfänger nach Anspruch 16, wobei der Empfänger (RE) zur Durchführung eines Verfahrens nach einem der Ansprüche 13 bis 15 ausgestaltet ist.

18. Verfahren zum Übertragen von Nachrichten mit Integritätsschutz, wobei die Nachrichten mit einem Verfahren nach einem der Ansprüche 1 bis 9 durch einen Sender (SE) ausgesendet und mit einem Verfahren nach einem der Ansprüche Anspruch 12 bis 15 durch einen Empfänger (RE) empfangen und verarbeitet werden.

19. System zum um Übertragen von Nachrichten mit Integritätsschutz, umfassend zumindest einen Sender (SE) nach Anspruch 10 oder 11 und zumindest einen Empfänger (RE) nach Anspruch 16 oder 17.

## Claims

1. Method for sending messages (M1, M2, M3) with integrity protection, in which, in a transmitter (SE) provided for sending the messages (M1, M2, M3):
- a hash chain of successive values (h1, h2, h3) is generated, wherein the values (h1, h2, h3) are generated from an initially generated value (h0) by successively applying a cryptographic hash function (H) to the initially generated value (h0), wherein the most recently generated value (h3) is an anchor value that is provided to one or more predetermined receivers (RE) of the messages (M1, M2, M3), and the remaining values (h0, h1, h2) are valid in the inverse order of their generation in successive validity periods (I0, I1, I2) ;
- a cryptographic checksum (MIC1, MIC2, MIC3) for a message (M1, M2, M3) to be sent is generated in the validity period (I0, I1, I2) of a respective value (h1, h2, h3) using the respective value (h0, h1, h2) and the checksum is sent together with the message (M1, M2, M3);
- the respective value (h0, h1, h2) is sent after expiry of its validity period (I0, I1, I2) ;
**characterized in that** the checksum (MIC1, MIC2, MIC3) is generated such that, for the message (M1, M2, M3) to be sent, a category (k1, k2, k3) characterizing the message (M1, M2, M3) is ascertained from which, together with the currently valid value (h0, h1, h2), a key (h21, h22, h03) that is used to generate the checksum (MIC1, MIC2, MIC3) for the message (M1, M2, M3) is derived by means of a key derivation function (KDF).

2. Method according to Claim 1, in which the ascertained category comes from one or more of the following categories (k1, k2, k3):
- one or more categories (k1, k2, k3) that each specify a type of a message (M1, M2, M3);
- one or more categories (k1, k2, k3) that each specify at least one service or at least one application that is used to send a message (M1, M2, M3);
- one or more categories (k1, k2, k3) that each specify one or more protocols and/or port numbers that are used to send a message (M1, M2, M3);
- one or more categories (k1, k2, k3) that each specify at least one predetermined receiver (RE) from which the message (M1, M2, M3) is provided;
- one or more categories (k1, k2, k3) that each specify an interval of time in which a message is sent, the interval of time preferably being shorter than the respective validity periods (I0, I1, I2).

3. Method according to Claim 1 or 2, in which the categories (k1, k2, k3) are included in the messages (M1, M2, M3) to be sent and/or are derived from the messages (M1, M2, M3) to be sent.

4. Method according to one of the preceding claims, in which the key derivation function (KDF) is a cryptographic hash function.

5. Method according to one of the preceding claims, in which the checksums (MIC1, MIC2, MIC3) are MAC codes or MIC codes.

6. Method according to one of the preceding claims, in which the messages (M1, M2, M3) are sent as broadcast and/or multicast messages.

7. Method according to one of the preceding claims, in which the messages (M1, M2, M3) are data packets and/or data frames of a predetermined protocol.

8. Method according to one of the preceding claims, in which the anchor value (h3) is provided to the predetermined receiver(s) (RE) in digitally signed fashion, the signature being verifiable by the predetermined receiver(s) (RE).

9. Method according to one of the preceding claims, in which the messages (M1, M2, M3) are transmitted in a data network for industrial automation and/or for energy automation and/or in a sensor network.

10. Transmitter for sending messages with integrity protection, wherein the transmitter is configured such that, using the transmitter (SE) during operation:
- a hash chain of successive values (h1, h2, h3) is generated, wherein the values (h1, h2, h3) are generated from an initially generated value (h0) by successively applying a cryptographic hash function (H) to the initially generated value (h0), wherein the most recently generated value (h3) is an anchor value that is provided to one or more predetermined receivers (RE) of the messages (M1, M2, M3), and the remaining values (h0, h1, h2) are valid in the inverse order of their generation in successive validity periods (I0, I1, I2) ;
- a cryptographic checksum (MIC1, MIC2, MIC3) for a message (M1, M2, M3) to be sent is generated in the validity period (I0, I1, I2) of a respective value (h1, h2, h3) using the respective value (h0, h1, h2) and the checksum is sent together with the message (M1, M2, M3);
- the respective value (h0, h1, h2) is sent after expiry of its validity period (I0, I1, I2) ;
**characterized in that** the checksum (MIC1, MIC2, MIC3) is generated such that, for the message (M1, M2, M3) to be sent, a category (k1, k2, k3) characterizing the message (M1, M2, M3) is ascertained from which, together with the currently valid value (h0, h1, h2), a key (h21, h22, h03) that is used to generate the checksum (MIC1, MIC2, MIC3) for the message (M1, M2, M3) is derived by means of a key derivation function (KDF).

11. Transmitter according to Claim 10, wherein the transmitter is configured to perform a method according to one of Claims 2 to 9.

12. Method for processing messages with integrity protection, the messages having been sent by a transmitter using a method according to one of Claims 1 to 9, wherein, in a predetermined receiver (RE) to which the anchor value (h3) is provided:
- the messages (M1, M2, M3) together with the checksums (MIC1, MIC2, MIC3) and also the respective value (h0, h1, h2) are received after expiry of the validity period (I0, I1, I2) of the latter;
- on reception of the respective value (h0, h1, h2), verification of the value (h0, h1, h2) based on the anchor value (h3) is performed;
- on successful verification of the respective value (h0, h1, h2), the category (k1, k2, k3) of messages (M1, M2, M3) received in the validity period of the respective value (h0, h1, h2) is ascertained and the same key derivation function (KDF) as is used by the transmitter (SE) is used to generate from the category (k1, k2, k3) of a message (M1, M2, M3) and the respective value (h0, h1, h2) a key (h21, h22, h03) that is used to verify the checksum (MIC1, MIC2, MIC3) of the message (M1, M2, M3).

13. Method according to Claim 12, wherein in the event of unsuccessful verification of the respective value (h0, h1, h2), the performance of one or more actions that are initiated by messages that have been received in the validity period (I0, I1, I2) of the respective value (h0, h1, h2) together with a check value (h0, h1, h2) is terminated and/or reversed.

14. Method according to Claim 12 or 13, wherein in the event of unsuccessful verification of the checksum (MIC1, MIC2, MIC3) of a message (M1, M2, M3), the performance of one or more actions that are initiated by the message is terminated and/or reversed.

15. Method according to one of Claims 12 to 14, wherein the anchor value (h3) is provided to the predetermined receiver (RE) in digitally signed fashion, the digital signature of the anchor value (h3) being verified in the receiver (RE).

16. Receiver for receiving and processing messages with integrity protection, the messages having been sent using a method according to one of Claims 1 to 9, wherein the anchor value (h3) is provided to the receiver and the receiver is configured such that, during operation thereof:
- the messages (M1, M2, M3) together with the checksums (MIC1, MIC2, MIC3) and also the respective value (h0, h1, h2) are received after expiry of the validity period (I0, I1, I2) of the latter;
- on reception of the respective value (h0, h1, h2), verification of the value (h0, h1, h2) based on the anchor value (h3) is performed;
- on successful verification of the respective value (h0, h1, h2), the category (k1, k2, k3) of messages (M1, M2, M3) received in the validity period of the respective value (h0, h1, h2) is ascertained and the same key derivation function (KDF) as is used by the transmitter (SE) is used to generate from the category (k1, k2, k3) of a message (M1, M2, M3) and the respective value (h0, h1, h2) a key (h21, h22, h03) that is used to verify the checksum (MIC1, MIC2, MIC3) of the message (M1, M2, M3).

17. Receiver according to Claim 16, wherein the receiver (RE) is configured to perform a method according to one of Claims 13 to 15.

18. Method for transmitting messages with integrity protection, wherein the messages are sent using a method according to one of Claims 1 to 9 by a transmitter (SE) and are received and processed using a method according to one of Claims 12 to 15 by a receiver (RE).

19. System for transmitting messages with integrity protection, comprising at least one transmitter (SE) according to Claim 10 or 11 and at least one receiver (RE) according to Claim 16 or 17.

## Revendications

1. Procédé d'envoi de messages (M1, M2, M3) avec protection de l'intégrité, dans lequel dans un émetteur (SE) prévu pour l'envoi des messages (M1, M2, M3):
- une chaîne de hachage de valeurs successives (h1, h2, h3) est produite, ces valeurs (h1, h2, h3) étant générées à partir d'une valeur initialement produite (h0) par l'application successive d'une fonction de hachage cryptographique (H) à la valeur initialement produite (h0), la valeur générée en dernier (h3) représentant une valeur d'ancrage procurée à un ou plusieurs récepteurs (RE) prédéterminé/s des messages (M1, M2, M3), et les valeurs restantes (h0, h1, h2) étant valides en suite inversée de leur production dans des périodes de validité (I0, I1, I2) successives;
- dans la période de validité (I0, I1, I2) d'une valeur respective (h1, h2, h3), une somme de contrôle cryptographique (MIC1, MIC2, MIC3) est générée pour un message à envoyer (M1, M2, M3) en utilisant la valeur respective (h0, h1, h2) et la somme de contrôle est envoyée en même temps que le message (M1, M2, M3);
- la valeur respective (h0, h1, h2) est envoyée après écoulement de sa période de validité (I0, I1, I2) ;
**caractérisé en ce que** la génération de la somme de contrôle (MIC1, MIC2, MIC3) s'effectue de telle sorte que pour le message à envoyer (M1, M2, M3) une catégorie (k1, k2, k3) de caractérisation du message (M1, M2, M3) est déterminée de laquelle une clé (h21, h22, h03) est dérivée, avec la valeur déjà valide (h0, h1, h2), à l'aide d'une fonction de dérivation de clé (KDF), grâce à laquelle la somme de contrôle (MIC1, MIC2, MIC3) est produite pour le message (M1, M2, M3).

2. Procédé selon la revendication 1, dans lequel la catégorie déterminée provient d'une ou de plusieurs des catégories suivantes (k1, k2, k3):
- une ou plusieurs catégories (k1, k2, k3) qui spécifient chaque fois le type d'un message (M1, M2, M3);
- une ou plusieurs catégories (k1, k2, k3) qui spécifient chaque fois au moins un service ou au moins une application par le biais duquel ou de laquelle un message (M1, M2, M3) est expédié;
- une ou plusieurs catégories (k1, k2, k3) qui spécifient chaque fois un ou plusieurs protocoles et/ou numéros de port, par le biais desquels un message (M1, M2, M3) est expédié;
- une ou plusieurs catégories (k1, k2, k3) qui spécifient chaque fois au moins un récepteur prédéterminé (RE) pour lequel le message (M1, M2, M3) est prévu;
- une ou plusieurs catégories (k1, k2, k3) qui spécifient chaque fois un intervalle de temps dans lequel un message est expédié, cet intervalle de temps étant de préférence plus court que les périodes de validité respectives (I0, I1, I2).

3. Procédé selon la revendication 1 ou 2, dans lequel les catégories (k1, k2, k3) sont contenues dans les messages à envoyer (M1, M2, M3) et/ou sont dérivées des messages à envoyer (M1, M2, M3).

4. Procédé selon l'une des revendications précédentes, dans lequel la fonction de dérivation de clé (KDF) est une fonction de hachage cryptographique.

5. Procédé selon l'une des revendications précédentes, dans lequel les sommes de contrôle (MIC1, MIC2, MIC3) sont des codes MAC ou des codes MIC.

6. Procédé selon l'une des revendications précédentes, dans lequel les messages (M1, M2, M3) sont envoyés comme des messages de diffusion et/ou de multidiffusion.

7. Procédé selon l'une des revendications précédentes, dans lequel les messages (M1, M2, M3) sont des paquets de données et/ou des trames de données d'un protocole prédéterminé.

8. Procédé selon l'une des revendications précédentes, dans lequel la valeur d'ancrage (h3) est procurée au ou aux récepteur/s prédéterminé/s (RE) avec signature numérique, la signature pouvant être vérifiée par le ou les récepteur/s (RE) prédéterminé/s.

9. Procédé selon l'une des revendications précédentes, dans lequel les messages (M1, M2, M3) sont transmis dans un réseau de données pour automatisation industrielle et/ou pour automatisation de l'énergie et/ou dans un réseau de détecteurs.

10. Émetteur pour l'envoi de messages avec protection de l'intégrité, l'émetteur étant configuré de telle sorte que, avec l'émetteur (SE) en service:
- une chaîne de hachage de valeurs successives (h1, h2, h3) est produite, ces valeurs (h1, h2, h3) étant générées à partir d'une valeur initialement produite (h0) par l'application successive d'une fonction de hachage cryptographique (H) à la valeur initialement produite (h0), la valeur générée en dernier (h3) représentant une valeur d'ancrage procurée à un ou plusieurs récepteur/s (RE) prédéterminé/s des messages (M1, M2, M3), et les valeurs restantes (h0, h1, h2) étant valides en suite inversée de leur production dans des périodes de validité (I0, I1, I2) successives;
- dans la période de validité (I0, I1, I2) d'une valeur respective (h1, h2, h3), une somme de contrôle cryptographique (MIC1, MIC2, MIC3) est générée pour un message à envoyer (M1, M2, M3) en utilisant la valeur respective (h0, h1, h2) et la somme de contrôle est envoyée en même temps que le message (M1, M2, M3);
- la valeur respective (h0, h1, h2) est envoyée après écoulement de sa période de validité (I0, I1, I2) ;
**caractérisé en ce que** la génération de la somme de contrôle (MIC1, MIC2, MIC3) s'effectue de telle sorte que pour le message à envoyer (M1, M2, M3) une catégorie (k1, k2, k3) de caractérisation du message (M1, M2, M3) est déterminée de laquelle une clé (h21, h22, h03) est dérivée, avec la valeur déjà valide (h0, h1, h2) à l'aide d'une fonction de dérivation de clé (KDF), grâce à laquelle la somme de contrôle (MIC1, MIC2, MIC3) est produite pour le message (M1, M2, M3).

11. Émetteur selon la revendication 10, l'émetteur étant configuré pour l'exécution d'un procédé selon l'une des revendications 2 à 9.

12. Procédé de traitement de messages avec protection de l'intégrité, les messages étant envoyés par un émetteur avec un procédé selon l'une des revendications 1 à 9, dans un récepteur prédéterminé (RE), à qui l'on a procuré la valeur d'ancrage (h3):
- les messages (M1, M2, M3) étant reçus avec les sommes de contrôle (MIC1, MIC2, MIC3) ainsi que la valeur respective (h0, h1, h2) après écoulement de sa période de validité (I0, I1, I2) ;
- lors de la réception de la valeur respective (h0, h1, h2), une vérification de la valeur (h0, h1, h2) étant effectuée sur base de la valeur d'ancrage (h3);
- en cas de vérification réussie de la valeur respective (h0, h1, h2), la catégorie (k1, k2, k3) des messages (M1, M2, M3) reçus dans la période de validité de la valeur respective (h0, h1, h2) étant déterminée et au moyen de la même fonction de dérivation de clé (KDF), laquelle est utilisée par l'émetteur (SE), une clé (h21, h22, h03) étant produite de la catégorie (k1, k2, k3) d'un message (M1, M2, M3) et de la valeur respective (h0, h1, h2), grâce à laquelle la somme de contrôle (MIC1, MIC2, MIC3) du message (M1, M2, M3) est vérifiée.

13. Procédé selon la revendication 12, dans lequel en cas de vérification réussie de la valeur respective (h0, h1, h2), l'exécution d'une ou de plusieurs actions, lesquelles sont initiées par des messages qui sont reçus dans la période de validité (I0, I1, I2) de la valeur respective (h0, h1, h2), avec une valeur de contrôle (h0, h1, h2), est clôturée et/ou est annulée.

14. Procédé selon la revendication 12 ou 13, dans lequel en cas de vérification avortée de la somme de contrôle (MIC1, MIC2, MIC3) d'un message (M1, M2, M3), l'exécution d'une ou de plusieurs actions, lesquelles sont initiées par le message, est clôturée et/ou annulée.

15. Procédé selon l'une des revendications 12 à 14, la valeur d'ancrage (h3) étant procurée au récepteur prédéterminé (RE) avec signature numérique, la signature numérique de la valeur d'ancrage (h3) étant vérifiée dans le récepteur (RE).

16. Récepteur pour la réception et le traitement de messages avec protection de l'intégrité, les messages étant envoyés par un procédé selon l'une des revendications 1 à 9, la valeur d'ancrage (h3) étant procurée au récepteur et le récepteur étant configuré de manière qu'en service:
- les messages (M1, M2, M3) sont reçus avec les sommes de contrôle (MIC1, MIC2, MIC3) ainsi que la valeur respective (h0, h1, h2) après écoulement de sa période de validité (I0, I1, I2) ;
- lors de la réception de la valeur respective (h0, h1, h2), une vérification de la valeur (h0, h1, h2) s'effectue sur base de la valeur d'ancrage (h3);
- en cas de vérification réussie de la valeur respective (h0, h1, h2), la catégorie (k1, k2, k3) des messages (M1, M2, M3) reçus dans la période de validité de la valeur respective (h0, h1, h2) est déterminée et, au moyen de la même fonction de dérivation de clé (KDF), laquelle est utilisée par l'émetteur, une clé (h21, h22, h03) est produite de la catégorie (k1, k2, k3) d'un message (M1, M2, M3) et de la valeur respective (h0, h1, h2), grâce à laquelle la somme de contrôle (MIC1, MIC2, MIC3) du message (M1, M2, M3) est vérifiée.

17. Récepteur selon la revendication 16, le récepteur (RE) étant configuré pour l'exécution d'un procédé selon l'une des revendications 13 à 15.

18. Procédé de transmission de messages avec protection de l'intégrité, les messages étant envoyés par un procédé selon l'une des revendications 1 à 9 par un émetteur (SE) et étant reçus et traités par un récepteur (RE) avec un procédé selon l'une des revendications 12 à 15.

19. Système de transmission de messages avec protection de l'intégrité, comprenant au moins un émetteur (SE) selon la revendication 10 ou 11 et au moins un récepteur (RE) selon la revendication 16 ou 17.
